# EUROPEAN PATENT SPECIFICATION

(11) **EP 4 462 586 B1**
(45) Date of publication and mention of the grant of the patent: **26.08.2026**
(21) Application number: 23883042.6
(22) Date of filing: 24.10.2023
(51) Int. Cl.: H01M 50/591, H01M 50/521, H01M 50/24, H01M 50/289, H01M 50/204, C08L 83/04, C09J 183/04

(54) **FIREPROOF BUS BAR AND BATTERY PACK COMPRISING SAME**
FEUERFESTE SAMMELSCHIENE UND BATTERIEPACK DAMIT
BARRE OMNIBUS IGNIFUGE ET BLOC-BATTERIE LA COMPRENANT

(30) Priority: 26.10.2022 KR 20220139401
(43) Date of publication of application: 13.11.2024
(73) Proprietor: LG Energy Solution, Ltd., Seoul 07335 (KR)
(72) Inventor: YUN, Sun Woo, Daejeon 34122 (KR)
(74) Representative: Goddar, Heinz J.
(86) International application number: PCT/KR2023/016517
(87) International publication number: WO 2024/090936

(56) References cited:
- CN-U- 208 938 704
- CN-U- 214 124 043
- CN-U- 215 770 643
- KR-A- 20190 096 674
- KR-A- 20210 050 983
- KR-A- 20210 141 095
- KR-A- 20220 048 212
- US-A1- 2020 296 867

## Description

### [Technical Field]

The present invention relates to a fire-resistant bus bar and a battery pack including the same.

More specifically, the present invention relates to a fire-resistant bus bar including a sheath layer of a fire-resistant silicone ceramicized at high temperatures and a protective layer covering the sheath layer to maintain insulation and airtight properties even at high temperatures at which ignition occurs in a battery pack, and the battery pack.

### [Background Art]

A battery pack for use in electric vehicles, etc. has a structure in which a plurality of battery modules including a plurality of secondary batteries are connected in series or in parallel to obtain high power. The secondary batteries each include positive and negative current collectors, a separator, an active material, an electrolyte, etc. and thus can be repeatedly charged and discharged through an electrochemical reaction between these components.

A bus bar is used to electrically connect the battery modules. The bus bar is used to electrically connect terminal parts of adjacent battery modules or to connect battery modules to an external electric device.

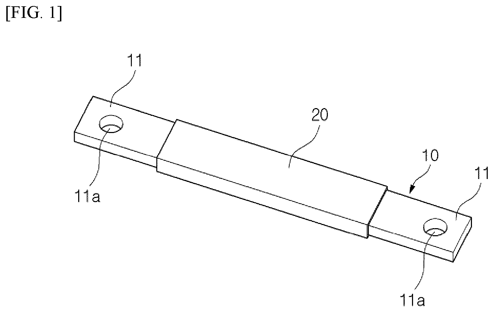

FIG. 1 is a schematic diagram illustrating a structure of a bus bar of the related art.

As shown in FIG. 1, a bus bar 1 of the related art includes a bus bar conductor part 10 and a sheath layer 20 surrounding the bus bar conductor part 10. The bus bar conductor part 10 is, for example, a high-purity copper conductor part such as C1100 or a conductor part formed of a metal such as aluminum. The sheath layer 20 is formed of general silicone rubber or epoxy. The sheath layer 20 covers the body of the bus bar conductor part 10 excluding both ends 11 thereof. The both ends 11 of the bus bar conductor part 10 are provided with fastening holes 11a into which corresponding electrical connection parts are fastened.

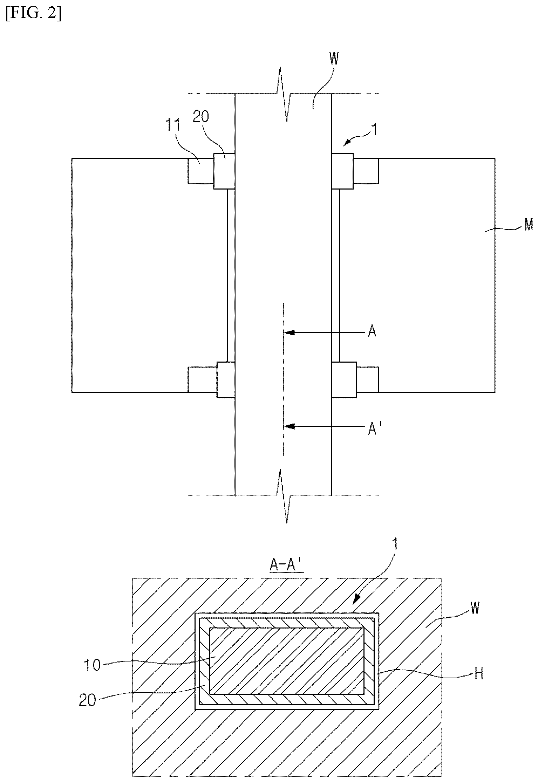

FIG. 2 illustrates that battery modules M, which are to be installed in a battery pack, are electrically connected using the bus bar 1. The bus bar 1 is installed in a through-hole H of a partition W installed between the battery modules M, and the both ends 11 of the exposed metal conductor part 10 of the bus bar 1 are connected to module terminal parts at both sides of the partition wall.

When in a battery pack, for example, battery modules are electrically connected using the bus bar 1 of the related art, there is no problem with the operation of the battery pack at normal temperatures at which the battery pack operates normally.

However, when flames occur in the battery pack, the temperature of the flames is very high (500 to 800 °C or 800 °C or higher, or 1000 °C or higher in severe cases), and thus, the sheath layer formed of silicone rubber or epoxy melts completely and the bus bar conductor part is exposed to the outside. In this case, the exposed bus bar conductor part comes into electrical contact with other metal parts in the battery pack, thus causing an electrical short circuit to occur, and the flames spread further due to heat generated due to the electrical short circuit.

To prevent thermal propagation, a bus bar including a sheath layer formed of mica sheet, glass fiber, heat-resistant silicone (rubber) or the like may be taken into account.

However, in such a situation in which extremely high heat is generated, thermal propagation cannot be sufficiently prevented using the above-described materials. For example, a heat-resistant temperature of general heat-resistant silicone rubber is only in a range of 125 to 300 °C and thus a situation in which ignition occurs in a battery pack cannot be effectively coped with. In addition, the sheath layer formed of mica sheet or glass fiber does not exhibit sufficient fire-resistance performance.

As described above, there have been recent demands to essentially design battery packs such that flames are prevented from leaking to the outside of the battery packs when ignition occurs in the battery packs.

In addition, there is a need to design a bus bar conductor part to be thermally and electrically insulated from surroundings even at high temperatures when flames occur .

As described above, it is necessary to develop a technique for improving an insulation level and assemblability while securing fire resistance at high temperatures to maintain electrical insulation.

### [Related Art Literature]

### [Patent Document]

Korean Patent Publication Laid-Open No. 10-2022-0001228
CN 208938704 U discloses a fire-resistant bus bar comprising: a bus bar conductor part; a sheath layer of a fire-resistant silicone covering portions of the bus bar conductor part excluding both ends and ceramicized at high temperatures to support the bus bar conductor part; and a protective layer covering the sheath layer of the fire-resistant silicone.

### [Disclosure]

### [Technical Problem]

The present invention is directed to providing a fire-resistant bus bar for maintaining thermal and electrical insulation as long as possible even when flames occur in a battery pack.

The present invention is also directed to providing a battery pack including the fire-resistant bus bar.

### [Technical Solution]

According to an aspect of the present invention, a fire-resistant bus bar includes a bus bar conductor part, a sheath layer of a fire-resistant silicone covering portions of the bus bar conductor part excluding both ends thereof and ceramicized at high temperatures to support the bus bar conductor part, and a protective layer covering the sheath layer of the fire-resistant silicone, in which a metal sheet is included in the sheath layer of the fire-resistant silicone to reinforce structural rigidity of the sheath layer of the fire-resistant silicone.

The fire-resistant silicone may be ceramicized at a temperature of 500 to 1700 °C.

The fire-resistant silicone may be ceramicized by sintering a silicone resin containing a silicone compound represented by Chemical Formula 1 below and a metal oxide containing silicon oxide.

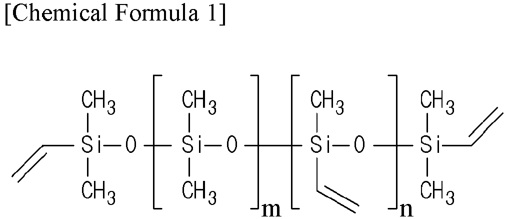

In Chemical Formula 1, m and n are each an integer of 10 to 30.

The silicone resin and the metal oxide may be contained in a weight ratio of 1:0.5 to 1:1.5.

The metal oxide containing silicon oxide may contain at least one of pure silicon dioxide, silica, quartz, silica stone, tridymite, and keatite.

The metal sheet may be included in the sheath layer of the fire-resistant silicone to cover the bus bar conductor part while extending along the sheath layer of the fire-resistant silicone covering the bus bar conductor part.

The sheath layer of the fire-resistant silicone may be provided between the inside of the metal sheet and the bus bar conductor part. The sheath layer of the fire-resistant silicone may be provided between the outside of the metal sheet and the protective layer. Portions of the sheath layer of the fire-resistant silicone inside and outside the metal sheet are coupled to each other through a through-hole formed in the metal sheet.

The metal sheet may be molded together with the sheath layer of the fire-resistant silicone.

The metal sheet may be provided with a plurality of through-holes, and the metal sheet and the sheath layer of the fire-resistant silicone may be integrally formed by injection-molding a fire-resistant silicone on upper and lower surfaces of the metal sheet to coat the upper and lower surfaces of the metal sheet with the fire-resistant silicone and fill the plurality of through-holes with the fire-resistant silicone.

The bus bar conductor part may be coated with the sheath layer of the fire-resistant silicone by processing the metal sheet and the sheath layer of the fire-resistant silicone, which are integrally formed, in the form of a tape and winding the tape around the bus bar conductor part.

In the fire-resistant bus bar of the present invention, the bus bar conductor part and the metal sheet are disposed in a mold, so that the metal sheet may be spaced apart from the bus bar conductor part while covering the bus bar conductor part, and the bus bar conductor part may be coated with the sheath layer of the fire-resistant silicone including the metal sheet by injection molding the fire-resistant silicone into the mold.

The protective layer may be formed of glass fiber or mica.

The fire-resistant bus bar may be a high-voltage bus bar for electrically connecting high-voltage terminal parts of a plurality of battery modules.

According to another aspect of the present invention, a battery pack includes a plurality of battery modules, an anti-flame partition installed between the plurality of battery modules, the fire-resistant bus bar for electrically connecting the plurality of battery modules, and a pack housing accommodating the plurality of battery modules and the anti-flame partition.

The anti-flame partition may be provided with a bus bar installation through-hole or a bus bar installation groove, the fire-resistant bus bar may be seated in the bus bar installation through-hole or the bus bar installation groove, and both ends of the fire-resistant bus bar may be electrically coupled to terminal parts of battery modules located at both sides of the anti-flame partition.

### [Advantageous Effects]

A fire-resistant bus bar of the present invention includes a sheath layer of a fire-resistant silicone ceramicized to support a bus bar conductor part when flames occur in a pack instead of a sheath layer burned in flames, thus maintaining insulation and airtight characteristics even at high temperatures.

The sheath layer of the fire-resistant silicone includes a metal sheet to reinforce the structural rigidity thereof, thereby preventing deformation due to an external force. The metal sheet maintains the insulation and shape of the bus bar and has a shielding function necessary for high voltage.

The fire-resistant bus bar of the present invention include a protective layer to protect the sheath layer of the fire-resistant silicone. The protective layer may primarily function as a fire-resistant wall while preventing the sheath layer of the fire-resistant silicone from being directly exposed to flames, thereby maintaining an overall shape and dimensions.

### [Brief Description of the Drawings]

FIG. 1 is a schematic diagram and a cross-sectional view of a structure of a bus bar of the related art.
FIG. 2 is a schematic diagram illustrating an example in which battery modules are connected using a bus bar of the related art.
FIG. 3 is a perspective view and a cross-sectional view of a fire-resistant bus bar according to an embodiment of the present invention.
FIG. 4 is a schematic diagram illustrating an example of a process of manufacturing a fire-resistant bus bar of the present invention.
FIG. 5 is a schematic diagram illustrating another example of a process of manufacturing a fire-resistant bus bar of the present invention.
FIG. 6 is a schematic view of an example of a structure of a battery pack in which a fire-resistant bus bar of the present invention is installed.
FIG. 7 is a schematic view of another example of a structure of a battery pack in which a fire-resistant bus bar of the present invention is installed.
FIG. 8 is a side cross-sectional view illustrating a state in which a fire-resistant bus bar of the present invention is installed in a battery pack.

### [Best Mode]

Hereinafter, a configuration of the present invention will be described in detail with reference to the accompanying drawings and various embodiments. Embodiments described below are provided as examples to help the understanding of the present invention, the accompanying drawings are not drawn on actual scale to help the understanding of the present invention, and the sizes of some components may be exaggerated.

The present invention may be embodied in many different forms and implemented in various embodiments. Thus, certain embodiments are illustrated in the drawings and described in detail herein.

### [Fire-resistant Bus Bar]

A fire-resistant bus bar of the present invention includes a bus bar conductor part, a sheath layer of a fire-resistant silicone that covers the bus bar conductor part excluding both ends of the bus bar conductor part and is ceramicized at high temperatures to support the bus bar conductor part, and a protective layer covering the sheath layer of the fire-resistant silicone, and a metal sheet is included in the sheath layer of the fire-resistant silicone to reinforce the structural rigidity of the sheath layer of the fire-resistant silicone.

The bus bar conductor part may be a general metal conductor part. That is, the bus bar conductor part may be formed of a high-purity tough pitch copper material with purity of 99.9% or more, e.g., C1100, or an aluminum material. That is, a material of the bus bar conductor part of the present invention is not particularly limited as long as it is a metal material available as a bus bar conductor for connecting electrical components. The both ends of the bus bar conductor part are electrically connected to corresponding electrical connection parts.

The sheath layer of the fire-resistant silicone is a layer applied to the bus bar conductor part while surrounding portions of the bus bar conductor part excluding both ends thereof. That is, the periphery of a central portion of the bus bar conductor part excluding the both ends is coated with the sheath layer of the fire-resistant silicone. The sheath layer of the fire-resistant silicone is ceramicized at high temperatures to support the bus bar conductor part. The fire-resistant silicone may be ceramicized at a temperature of 500 to 1700 °C. The fire-resistant silicone of the present invention with a fire-resistant temperature of 500 °C or higher is distinguished from a heat-resistant silicone with a heat-resistant temperature of less than 300 °C. The heat-resistant silicone is a silicone resin or rubber composition that is a material with flexibility and bendability that are characteristics of a silicone but is burned out or burned into ashes at a high temperature of 500 °C or higher. Therefore, there is a limit to applying the heat-resistant silicone to prevent a short circuit from occurring in a battery pack during heat propagation or prevent heat propagation.

The sheath layer of the fire-resistant silicone is ceramicized, i.e., it exhibits "fire-resistant" performance, at a high temperature of 500 °C or higher, thereby maintaining insulation and airtightness characteristics in the battery pack even when flames occur.

As described above, a fire-resistant bus bar according to the present invention exhibits high fire-resistant performance, because the fire-resistant bus bar includes a fire-resistant silicone and a structure thereof is improved.

The fire-resistant silicone is a composition containing a silicone resin and a metal oxide as main components and thus exhibits flexibility and bendability, which are characteristics of a silicone, at room temperature. In addition, the fire-resistant silicone has a certain level of elasticity and thus exhibits high impact resistance and insulation, and a silicone sintered body with a complex ceramic structure may be formed due to sintering of the silicone resin and the metal oxide when the fire-resistant silicone is exposed to a high temperature.

Specifically, the silicone resin contained in the fire-resistant silicone produces silica in powder form when burned at a high temperature. The produced silica reacts with the metal oxide contained in the fire-resistant silicone to form an "eutectic mixture" on an edge of the metal oxide, so that bridging may be performed between the silica and the metal oxide, thus causing the formation of a ceramic product that is cured at an ignition temperature and condensed when cooled. Such a ceramic body prevents a short-circuit or disconnection between conductors due to damage to the sheath layer of the fire-resistant silicone even when external mechanical impact is applied or moisture penetrates in the case of a fire, thereby performing an electrical function of the bus bar.

To this end, the fire-resistant silicone according to the present invention includes a silicone resin and a metal oxide.

The silicone resin is not particularly limited as long as it is a resin containing silicon (Si) in a molecule but preferably contains a silicone compound represented by Chemical Formula 1 below (hereinafter referred to as a silicone compound of Chemical Formula 1).

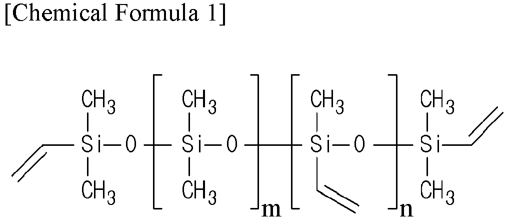

In Chemical Formula 1, m and n are each an integer of 10 to 30.

In Chemical Formula 1, the silicone compound includes a methylsiloxane repeating unit, and includes a vinyl group at the inside of and an end of the methylsiloxane repeating unit. The vinyl group is contained in the repeating unit as well as at the end of the silicone compound of Chemical Formula 1 to increase a degree of polymerization of the silicone resin when exposed to a high temperature, thereby implementing excellent fire-resistance characteristics compared to a silicone compound that does not contain the vinyl group.

In addition, the weight-average molecular weight of the silicone compound of Chemical Formula 1 may be adjusted to be in a specific range. The silicone compound of Chemical Formula 1 is a compound serving as a base of the silicone resin and thus may affect the physical properties of the fire-resistant silicone at room temperature and high temperatures according to the weight-average molecular weight of the silicone compound of Chemical Formula 1. For example, when the weight-average molecular weight of the silicone compound of Chemical Formula 1 is excessively high, the viscosity of the silicone resin increases and thus reactivity may decrease during high-temperature sintering, and when the weight-average molecular weight is extremely low, the elasticity and flexibility of the silicone resin at room temperature decrease, thus reducing the manufacturing processability, impact resistance, etc. of the fire-resistant bus bar. Therefore, the weight-average molecular weight of the silicone compound of Chemical Formula 1 according to the present invention may be adjusted to be in a range of 1,000 to 9,000 g/mol, and specifically, a range of 3,000 to 8,000 g/mol or a range of 5,000 to 7,000 g/mol.

In addition, the metal oxide is a composition containing silicon oxide and may function as a crystalline nucleus to form a high-density ceramic body together with the silicone resin described above when exposed to high temperatures.

The metal oxide may include at least one of silicon dioxide, silica, quartz, silica stone, tridymite, and keatite. The metal oxide may include pure silicon dioxide (SiO₂) and a mineral, e.g., quartz, which contains silicon dioxide (SiO₂) as a main component, is economically feasible, has a high melting point (high fire-resistance) and a high sintering degree, and may exhibit excellent electrical insulation performance. In particular, silicon dioxide, silica, quartz, etc. may contribute to improving various performances in a sintering process, cause fire-resistant silicone to be easily dissolved and molded, and reduce defects that may occur in ceramic bodies.

In addition, the metal oxide preferably has a crystal structure that increases fire resistance, insulation, mechanical strength, etc. when sintered together with a silicone resin. The metal oxide may be in the form of powder, and may have, but is not limited to, a size of 200 µm or less, for example, a size of 0.1 µm to 200 µm or a size of 0.1 µm to 100 µm.

The silicone resin may further contain a silicone compound represented by Chemical Formula 2 below (hereinafter referred to as "silicone compound of Chemical Formula 2"), and the silicone compound of Chemical Formula 2 participates in the sintering of the metal oxide at a high temperature together with the silicone compound of Chemical Formula 1 to form a silicone sintered body.

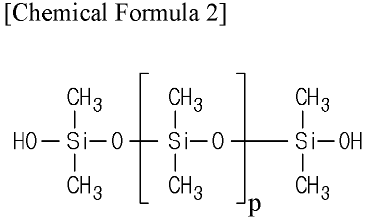

In Chemical Formula 2 above, p is an integer of 10 to 30.

The silicone compound of Chemical Formula 2 may increase the flexibility of the fire-resistant silicone at room temperature and induce the termination of the sintering of the silicone resin through dehydration condensation with the silicone compound of Chemical Formula 1 during sintering, thereby terminating the formation reaction of the ceramic body.

To this end, the silicone compound of Chemical Formula 2 may be used in an amount of less than 10 parts by weight, for example, 0.5 to 9 parts by weight, 1 to 6 parts by weight, or 2 to 5 parts by weight, based on the 100 parts by weight of the fire-resistant silicone.

In addition, the fire-resistant silicone may contain a silicone resin and a metal oxide in a certain ratio to realize high elasticity at room temperature and form a ceramic body quickly when exposed to high temperatures.

Specifically, in the fire-resistant silicone, a weight ratio between the silicone resin and the metal oxide may be 1:0.5 to 1:1.5, and specifically, 1:0.8 to 1:1.2. When the weight ratio of the metal oxide is less than 0.5, it is difficult to obtain a ceramic structure having a high-density crystal structure at high temperatures and thus sufficient fire resistance and mechanical strength are not achieved. When the weight ratio of the metal oxide exceeds 1.5, the flexibility of the fire-resistant silicone decreases at room temperature and thus the fire-resistant silicone is difficult to be processed.

For example, the fire-resistant silicone of the present invention may contain 35 to 50 wt% of the silicone compound of Chemical Formula 1, 16 to 32 wt% quartz, 10 to 27 wt% silicon dioxide, and 1 to 6 wt% of the silicone compound of Chemical Formula 2, and may further contain a certain solvent to increase processability during the manufacture of the fire-resistant silicone in some cases.

As described above, the fire-resistant silicone of the present invention is cured and ceramicized by sintering the silicone resin and the metal oxide at 500 °C or higher. The fire-resistant silicone may be ceramicized at temperatures of up to 1700 °C, and theoretically can be kept partially ceramicized even at temperatures above 1700 °C. However, at a temperature above 1700 °C, a time period during which the fire-resistant silicone is kept ceramicized may decrease, thus causing a failure of the maintenance of fire-resistance performance required inside a battery pack.

As described above, the fire-resistant silicone has the same properties as rubber having bendability, flexibility, and elasticity before being ceramicized. Therefore, the sheath layer of the fire-resistant silicone is easily injection-molded or applied to the bus bar conductor part as described below.

The sheath layer of the fire-resistant silicone is flexible before being ceramicized and thus may flexibly follow deformation of the bus bar conductor part. Therefore, when the fire-resistant bus bar of the present invention is installed in the battery pack, it is possible to easily respond to even a slight assembly tolerance, thus improving assemblability. For example, when a battery module is fastened to the battery pack by bolting, the sheath layer of the fire-resistant silicone may absorb the movement or slight distortion of a bus bar conductor part coupled to the battery module. In addition, even when the battery pack vibrates due to the vibration of an electric vehicle, the sheath layer of the fire-resistant silicone may naturally absorb the vibration.

Meanwhile, when the fire-resistant silicone is ceramicized at a high temperature, the fire-resistant silicone is thermally and electrically insulated but the mechanical strength thereof decreases slightly and thus the fire-resistant silicone is likely to be broken by an external force. In the present invention, in order to structurally improve the rigidity of the sheath layer of the fire-resistant silicone, a metal sheet included in the sheath layer of the fire-resistant silicone and a protective layer covering the sheath layer of the fire-resistant silicone are provided.

The protective layer is a layer covering the outside of the sheath layer of the fire-resistant silicone to protect the sheath layer of the fire-resistant silicone not to be directly exposed to flames. That is, the protective layer primarily functions as a fire-resistant wall. In addition, when the sheath layer of the fire-resistant silicone is ceramicized, the protective layer covers the ceramicized sheath layer to maintain an overall shape and dimensions thereof.

A material of the protective layer may be, for example, glass fiber or mica material with insulating and heat resistance properties. That is, a glass fiber tape or mica tape may be wound around an outer side of the sheath layer of the fire-resistant silicone to prevent the sheath layer of the fire-resistant silicone from being exposed to the outside. However, the protective layer is not limited thereto and may be formed of a different material with excellent insulation or heat-resistance properties.

A metal sheet is included in the sheath layer of the fire-resistant silicone to reinforce the rigidity of the sheath layer of the fire-resistant silicone. The metal sheet is included in the sheath layer of the fire-resistant silicone to function as a frame. The sheath layer of the fire-resistant silicone has bendability and flexibility and thus may be structurally weak before the sheath layer of the fire-resistant silicone is ceramicized. For example, even when the sheath layer of the fire-resistant silicone is coated or applied and cured on the bus bar conductor, the sheath layer of the fire-resistant silicone is likely to deform due to the properties of a material thereof. However, when the metal sheet is included in the sheath layer of the fire-resistant silicone, the metal sheet functions as a frame to structurally support the sheath layer of the fire-resistant silicone.

Particularly, when the sheath layer of the fire-resistant silicone is ceramicized at a high temperature, the sheath layer of the fire-resistant silicone may brittle and thus mechanical strength thereof may decrease. In this case, a ceramicized silicone is structurally and firmly supported by the metal sheet, thus preventing the deformation of the sheath layer of the fire-resistant silicone due to an external force. Accordingly, the shape of the sheath layer of the fire-resistant silicone can be maintained, and the insulating function thereof can be stably maintained. In addition, the metal sheet is formed of a metal and thus may also have an electromagnetic shielding function when, for example, a fire-resistant bus bar is used as a high-voltage bus bar. Therefore, a fire-resistant bus bar of the present invention including the metal sheet therein may be appropriately used as a high-voltage bus bar.

The metal sheet may be formed of a metal such as aluminum, steel, or stainless steel. However, the present invention is not limited thereto, and other materials that reinforce the rigidity of the sheath layer of the fire-resistant silicone and has the electromagnetic shielding function may be used.

Shapes of the fire-resistant bus bar and the metal sheet will be described in detail with respect to the following embodiments.

### [Embodiments of the Present Invention]

### (First Embodiment)

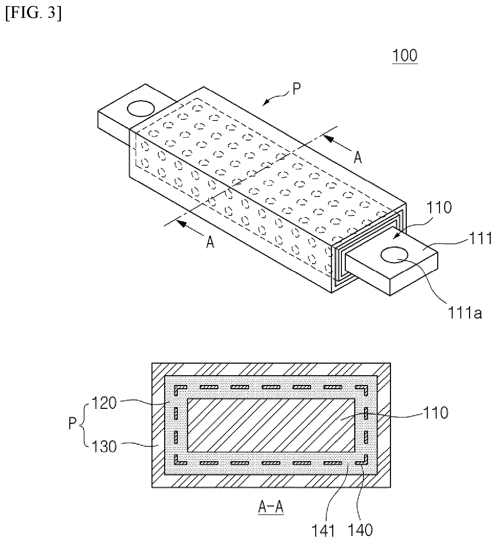

FIG. 3 is a perspective view and a cross-sectional view of a fire-resistant bus bar according to an embodiment of the present invention.

As illustrated in FIG. 3, a bus bar conductor part 110 is provided on an innermost side of a fire-resistant bus bar 100, and a covering part P is provided a part of a bus bar conductor part 110 excluding both ends 111. The both ends 111 of the bus bar conductor part 110 are exposed to the outside and provided with fastening holes 111a to combined with corresponding electrical connection parts (e.g., terminal parts).

The covering part P includes a sheath layer 120 of a fire-resistant silicone covering the bus bar conductor part 110, and a protective layer 130 covering the sheath layer 120 of the fire-resistant silicone. A metal sheet 140 is included in the sheath layer 120 of the fire-resistant silicone.

The sheath layer 120 of the fire-resistant silicone may be formed to be transparent or opaque according to a configuration of elements thereof. In the perspective view of FIG. 3, the sheath layer 120 of the fire-resistant silicone is illustrated to be transparent, so that the shape of the metal sheet 140 included therein may be clearly shown.

As shown in FIG. 3, the metal sheet 140 is included in the sheath layer 120 of the fire-resistant silicone to cover the bus bar conductor part 110 while extending along the sheath layer 120 of the fire-resistant silicone covering the bus bar conductor part 110. That is, the metal sheet 140 extends in the form of frame along the sheath layer 120 of the fire-resistant silicone. A thickness of the metal sheet 140 may be appropriately determined according to the thickness, composition, physical properties or the like of the sheath layer 120 of the fire-resistant silicone. In the case of a high-voltage bus bar, a thickness of the metal sheet 140 may be set to a thickness required to shield electromagnetic waves. For example, the metal sheet 140 may be manufactured to have a thickness of 0.3 mm to 3 mm.

The metal sheet 140 and the busbar conductor part 110 are preferably separated from each other for insulation. In this case, as shown in the cross-sectional view of FIG. 3, the sheath layer 120 of the fire-resistant silicone is disposed (filled) between the metal sheet 140 and the bus bar conductor part 110. In addition, the sheath layer 120 of the fire-resistant silicone is provided between an outer side of the metal sheet 140 and the protective layer 130. Accordingly, the sheath layer 120 of the fire-resistant silicone is located inside and outside the metal sheet 140 with the metal sheet 140 as a boundary. In this case, the sheath layer 120 of the fire-resistant silicone inside and outside the metal sheet 140 may be blocked by the metal sheet 140. However, in order to strengthen the combination of the metal sheet 140 and the sheath layer 120 of the fire-resistant silicone, it is more desirable to connect parts of the sheath layer 120 of the fire-resistant silicone inside and outside the metal sheet through the metal sheet 140.

To this end, as shown in FIG. 3, a through-hole 141 may be formed in the metal sheet 140. In this case, the parts of the sheath layer 120 of the fire-resistant silicone inside and outside the metal sheet 140 may be connected to each other through the through-hole 141. In this case, the metal sheet 140 and the parts of the sheath layer 120 of the fire-resistant silicone inside and outside the metal sheet 140 may be more firmly and integrally coupled to each other, thereby further improving the structural rigidity of the sheath layer 120 of the fire-resistant silicone. Therefore, when the sheath layer 120 of the fire-resistant silicone is ceramicized, the metal sheet 140 may support the sheath layer 120 of the fire-resistant silicone more firmly. A plurality of through-holes 141 may be formed in the metal sheet 140 to be spaced apart from each other. The through-hole 141 may have a circular shape, a quadrangular shape, or other shapes, and a size of the through-hole 141 may be appropriately selected.

The metal sheet 140 may be molded together with the sheath layer 120 of the fire-resistant silicone. The molding of the sheath layer 120 of the fire-resistant silicone and a manufacturing process of the fire-resistant bus bar 100 of the present invention will be described in detail in the following embodiments.

### (Second Embodiment)

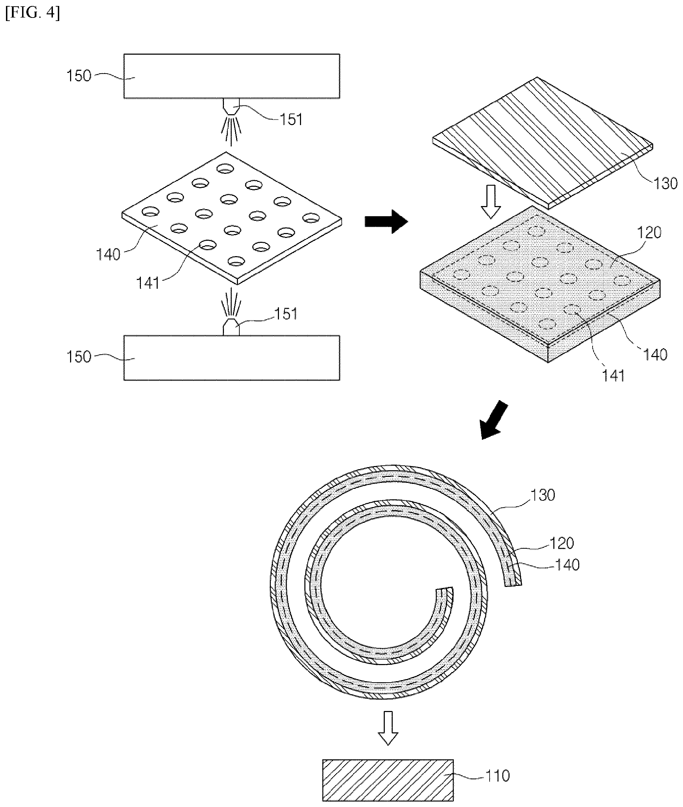

FIG. 4 is a schematic diagram illustrating an example of a process of manufacturing the fire-resistant bus bar 100 of the present invention.

In the present embodiment, the metal sheet 140 is molded together with the sheath layer 120 of the fire-resistant silicone.

The metal sheet 140 includes, for example, a plurality of circular through-holes 141. A fire-resistant silicone may be injected toward the metal sheet 140 from nozzles 151 of fire-resistant silicone storage tanks 150 above and below the metal sheet 140. As described above, the fire-resistant silicone may be, for example, a mixture of a silicone resin and a metal oxide and be included in a certain solvent in the form of a coating solution or slurry with fluidity. When such a fire-resistant silicone coating solution is injected toward upper and lower surfaces of the metal sheet 140, the upper and lower surfaces of the metal sheet 140 are coated with the fire-resistant silicone and at the same time, the through-hole 141 is filled with the fire-resistant silicone. In this case, the fire-resistant silicones on the upper and lower surfaces of the metal sheet 140 are integrally coupled through the through-hole 141 of the metal sheet 140. The injection of the fire-resistant silicone may be performed in a certain mold and thus the metal sheet 140 and the fire-resistant silicone may be integrally manufactured by injection-molding. The sheath layer 120 of the fire-resistant silicone coated on the metal sheet 140 may have physical properties such as those of silicone rubber by drying and curing processes.

As shown in FIG. 4, the metal sheet 140 and the sheath layer 120 of the fire-resistant silicone that are integrally manufactured may be processed in the form of a tape. The bus bar conductor part 110 may be coated with the sheath layer 120 of the fire-resistant silicone by winding such a fire-resistant silicone coated tape around the bus bar conductor part 110. Next, the fire-resistant bus bar 100 of the present invention may be manufactured by winding the protective layer 130, e.g., a glass fiber tape, around the sheath layer 120 of the fire-resistant silicone.

The fire-resistant silicone coated tape may be wound around the bus bar conductor part 110 and a tape of the protective layer 130 may be wound around the fire-resistant silicone coated tape, but as shown in FIG. 4, a covering part tape that forms the covering part P may be manufactured by attaching the tape of the protective layer 130 to the fire-resistant silicone coated tape. In this case, the fire-resistant bus bar 100 can be manufactured at once by winding the covering part tape around the bus bar conductor 110, thereby shortening a manufacturing process.

In the present embodiment, the covering part P is in the form of a tape and thus the tape of the covering part P may be repeatedly wound around the bus bar conductor part 110, thereby further enhancing insulation and fire resistance. In addition, it is convenient to adjust insulation properties and fire resistance to meet design values by adjusting the number of turns of the covering part tape.

However, in the case of the present embodiment, the flexibility of the metal sheet 140 may decrease when processed in the form of a tape. The metal sheet 140 may be bent along a curvature of the sheath layer 120 of the fire-resistant silicone when the metal sheet 140 is very thin but may be difficult to be wound in the form of a tape when the metal sheet 140 is relatively thick. In the following embodiment, a shape of the metal sheet 140 is processed in advance to eliminate such manufacturing difficulties.

### (Third Embodiment)

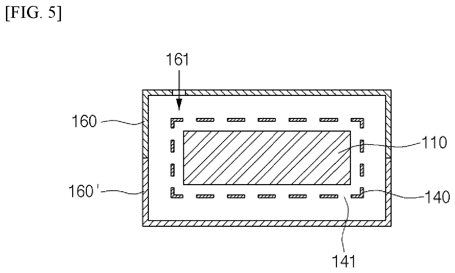

FIG. 5 is a schematic diagram illustrating another example of a process of manufacturing the fire-resistant bus bar 100 of the present invention.

In the present embodiment, the fire-resistant bus bar 100 is manufactured by disposing the metal sheet 140 and the bus bar conductor part 110 in a mold in advance and injecting the fire-resistant silicone into the mold by insert injection molding.

The bus bar conductor part 110 and the metal sheet 140 are disposed in upper and lower molds 160 and 160' for insert-injection molding of FIG. 5, so that the metal sheet 140 may be spaced apart from the bus bar conductor part 110 while surrounding the bus bar conductor part 110. Thereafter, a coating solution or slurry of the fire-resistant silicone is injected through injection holes 161 in the molds 160 and 160'. In this case, the fire-resistant silicone is filled between the metal sheet 140 and the bus bar conductor part 110 through the through-hole 141 of the metal sheet 140, and is also filled between an outer side of the metal sheet 140 and the molds 160 and 160'. As shown in FIG. 3, a sheath layer including the bus bar conductor part 110 therein may be obtained by removing the molds 160 and 160' after drying and curing processes are performed. Thereafter, the tape of the protective layer 130 such as a glass fiber tape or mica tape may be wound around the sheath layer to obtain the fire-resistant bus bar 100 of the present invention.

In the present embodiment, the metal sheet 140 is bent in advance to cover the bus bar conductor part 110, the metal sheet 140 that is relatively thick can be easily applied. The inside and outside of the metal sheet 140 can be simultaneously filled with the fire-resistant silicone through the through-hole 141 of the metal sheet 140, thereby simplifying a manufacturing process. In addition, a thickness of the sheath layer 120 of the fire-resistant silicone can be easily adjusted according to the size of a mold.

### (Battery Pack)

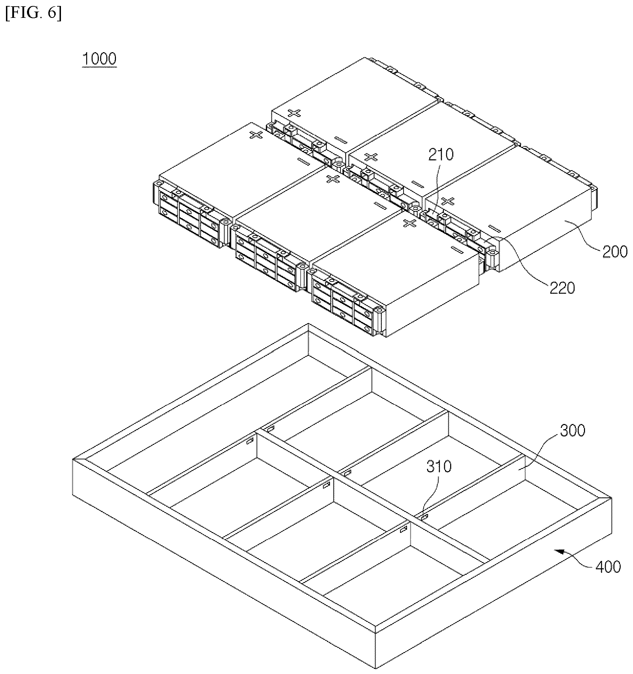

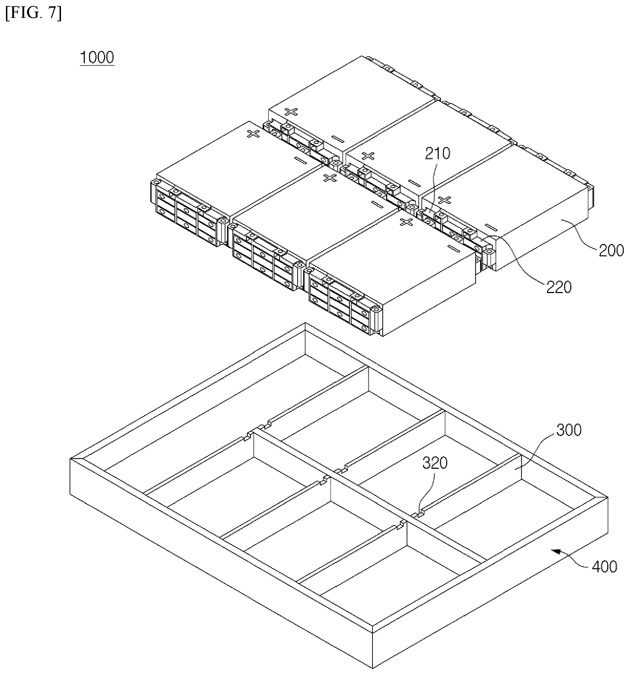

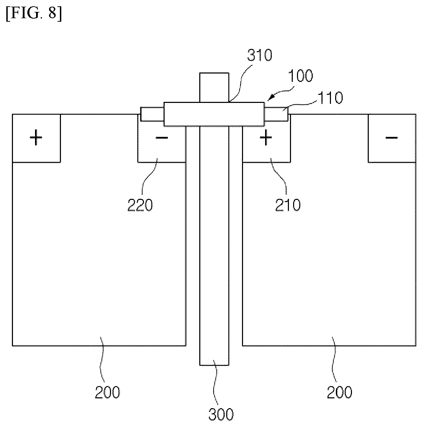

FIG. 6 is a schematic view of an example of a structure of a battery pack in which a fire-resistant bus bar of the present invention is installed. FIG. 7 is a schematic view of another example of a structure of a battery pack in which a fire-resistant bus bar of the present invention is installed. FIG. 8 is a side cross-sectional view illustrating a state in which a fire-resistant bus bar of the present invention is installed in a battery pack.

The above-described fire-resistant bus bar 100 of the present invention includes a sheath layer 120 of a fire-resistant silicone ceramicized at high temperatures, a protective layer 130 covering the sheath layer 120 of the fire-resistant silicone to maintain a shape, and a metal sheet 140 reinforcing the rigidity of the sheath layer 120 of the fire-resistant silicone. Therefore, when the fire-resistant bus bar 100 is applied to a battery pack in which ignition may occur, the safety of the battery pack can be greatly improved.

The fire-resistant bus bar 100 may be used to electrically connect, for example, a plurality of battery modules accommodated in a battery pack. In this case, the fire-resistant bus bar 100 may electrically connect terminal parts of adjacent battery modules. Alternatively, the fire-resistant bus bar 100 may be used to connect battery modules to an external electrical device.

Particularly, high-voltage terminal parts of the battery modules generate relatively high heat due to a high current. Accordingly, higher heat may be concentrated on the high-voltage terminal parts when flames occur in the pack. Therefore, the fire-resistant bus bar 100 of the present invention is applicable as a high-voltage bus bar for electrically connecting high-voltage terminal parts of a plurality of battery modules. In addition, the fire-resistant bus bar 100 includes the metal sheet 140 with an electromagnetic wave shielding function and thus is more suitable to be applied as a high-voltage bus bar in which the need for electromagnetic wave shielding is great.

A battery pack 1000 of the present invention may include a plurality of battery modules 200, anti-flame partitions 300 installed between the battery modules 200, the above-described fire-resistant bus bar 100 for electrically connecting the battery modules 200, and a pack housing 400 accommodating the battery modules 200 and the anti-flame partitions 300.

FIG. 6 illustrates that the plurality of battery modules 200 are accommodated in the pack housing 400. The battery modules 200 each include a cell stack (not shown) in which a plurality of battery cells are stacked, and cell leads with different polarities are drawn out from the battery cells of the cell stack. The cell leads are electrically connected to a bus bar such as a terminal bus bar or an inter-bus bar. The fire-resistant bus bar 100 of the present invention may be used to electrically connect the plurality of battery modules.

Meanwhile, FIGS. 6 and 7 illustrate a general battery module 200 in which a module housing completely surrounds upper, lower, left, and right sides of a battery cell stack. However, the present invention is not limited thereto, and the fire-resistant bus bar 100 of the present invention is also applicable to a battery module with a moduleless type module housing in which at least one of upper, lower, left and right sides of a cell stack is open or a battery cell block in which all of upper, lower, left and right sides of a cell stack are open. As described above, a battery pack with a so-called cell-to-pack structure may be configured by installing therein cell blocks or battery modules, in which part of or an entire module housing is omitted. The fire-resistant bus bar 100 of the present invention may be used for electrical connection of cell blocks or moduleless type battery modules installed in such a battery pack having the cell-to-pack structure.

In order to prevent flame propagation between adjacent modules, the battery pack 1000 may include the anti-flame partitions 300 installed between battery modules. The anti-flame partitions 300 may be formed of a metal to secure rigidity. The anti-flame partitions 300 prevent flames from propagating to adjacent modules when a fire occurs in one module. In this case, the anti-flame partitions 300 may be each provided with a bus bar installation through-hole 310 or a bus bar installation groove 320. FIG. 6 illustrates that the anti-flame partition 300 is provided with the bus bar installation through-hole 310. FIG. 7 illustrates that the anti-flame partition 300 is provided with the bus bar installation groove 320. In terms of flame prevention and airtightness, a partition is preferably provided with the bus bar installation through-hole 310 as shown in FIG. 6. An upper part of the bus bar installation groove 320 of FIG. 7 is open, thus facilitating installation of a bus bar and an electrical connection using the bus bar.

The fire-resistant bus bars 100 may be mounted in the bus bar installation through-hole 310 or the bus bar installation groove 320. In this case, both ends 111 of the bus bar conductor part 110 may be electrically coupled to terminal parts 210 and 220 of battery modules 200 located at both sides of the anti-flame partition 300.

FIG. 8 illustrates that the fire-resistant bus bar 100 electrically connects the battery modules 200 in the battery pack 1000. The anti-flame partition 300 may be located between adjacent battery modules 200 and provided with the bus bar installation through-hole 310. The fire-resistant bus bar 100 of the present invention is inserted into the through-hole.

Meanwhile, when a flame occurs in the battery pack 1000, in a fire-resistant bus bar of the present invention, a sheath layer 120 of a fire-resistant silicone surrounding the bus bar conductor part 110 is ceramicized, thus forming a dense sintered body. That is, at a high temperature of 500 °C or higher, the sheath layer 120 of the fire-resistant silicone is ceramicized and thus the shape thereof is maintained, unlike conventional heat-resistant silicone that is burned away or burned into ashes. Accordingly, the sheath layer 120 of the fire-resistant silicone stably supports the bus bar conductor part 110 even when a flame occurs. In this case, the metal sheet 140 reinforces the rigidity of the sheath layer 120 of the fire-resistant silicone to prevent the sheath layer 120 of the fire-resistant silicone from being broken. In addition, the protective layer 130 prevents the sheath layer 120 of the fire-resistant silicone from being in direct contact with flames, thus preventing the deformation of the fire-resistant silicone and further enhancing insulation and fire resistance.

### [Experimental Examples]

### (Experimental Example 1)

A fire-resistant silicone containing 50 parts by weight of the silicone compound of Chemical Formula 1, 20 parts by weight of quartz, and 30 parts by weight of pure silicon dioxide was applied to a certain thickness to a copper bus bar conductor part with a cross-sectional area, which is selected from a cross-sectional area that is in a range of 0.5 to 3 mm², excluding both ends thereof. A fire-resistant silicone coated bus bar of Example 1 was manufactured by winding a 0.18 mm glass fiber tape (product name: AGTWO) manufactured by SWECO twice around a bus bar coated with the fire-resistant silicone.

A bus bar of Comparative Example 1 was prepared by setting a length of a bus bar conductor part and exposed lengths of both ends of the bus bar conductor part to be the same as those of Example 1 and winding a glass fiber tape of AGTWO around a central portion of the bus bar conductor part. A thickness of covering of the wound glass fiber tape was set to be substantially the same as that of Example 1.

To manufacture a bus bar of Comparative Example 2, a mica tape formed of phlogopite mica, which is a natural mica, was wound around a central portion of a bus bar conductor part and the glass fiber tape of AGTWO was wound around the mica tape. A length of the bus bar conductor part and exposed lengths of both ends thereof are the same as those of Example 1 and Comparative Example 1.

To test insulation characteristics (insulation maintenance performance) when a fire occurs, a copper wire was wound around a covering part of each of the bus bars of Examples 1 to Comparative Example 2 the same number of turns, one end of an outermost copper wire of the covering part was connected to a negative electrode terminal of a withstand voltage tester, and one end of each of the bus bar conductor parts was connected to a positive electrode terminal of the withstand voltage tester. Entire surfaces of the bus bars were uniformly heated by a large torch with a flame temperature of 1100 to 1150 °C while a voltage of 1000 V was applied to the bus bars by the withstand voltage tester.

An insulation failure time during which an insulation state is destroyed, i.e., a short circuit occurs, was measured under the above-described voltage and heating temperature conditions, and measurement results are shown in Table 1 below.

**[Table 1]**

| Experimental Example 1 | Configuration of Bus Bar | Insulation Fail Time |
|---|---|---|
| Comparative Example 1 | copper bus bar conductor part+glass fiber tape | 1 minute and 35 seconds |
| Comparative Example 2 | copper bus bar conductor part+mica tape+glass fiber tape | 10 minutes |
| Example 1 | copper bus bar conductor part+sheath layer of fire-resistant silicone+glass fiber tape | 14 minutes |

As shown in Table 1, an insulation fail time of the bus bar with a sheath layer of the present invention was longest and showed a significant difference from those of Comparative Examples 1 and 2.

Therefore, it can be seen that insulation characteristics of the fire-resistant bus bar of the present invention that includes the sheath layer of the fire-resistant silicone and the protective layer are excellent. In Example 1, insulation performance was tested without a metal sheet, and it is obvious that insulation performance will be further improved with respect to external high temperatures when the metal sheet is included in the sheath layer of the fire-resistant silicone. In addition, when the metal sheet is installed, mechanical strength of the sheath layer of the fire-resistant silicone when ceramicized may increase and an electromagnetic wave shielding function may be additionally achieved.

### (Experimental Example 2)

Fire-resistant silicones with compositions shown in Table 2 below were prepared while changing a weight ratio between the silicone compound of Chemical Formula 1 and a metal oxide.

A fire-resistant silicone was applied to a certain thickness to a copper bus bar conductor part under the same conditions as in Experimental Example 1 and the glass fiber tape of AGTWO was wound around the sheath layer of the fire-resistant silicone.

A copper wire was wound around the sheath layer of the fire-resistant silicone under the same conditions in Experimental Example 1 and connected to a withstand voltage tester. Heating was performed by a large torch under the same conditions as in Experimental Example 1 while a voltage was applied, and insulation fail times were measured. Measurement results are shown in Table 2 below.

**[Table 2]**

| Experimental Example 2 | Composition of Sheath Layer of Fire-Resistant Silicone | Insulation Fail Time |
|---|---|---|
| Example 1 | 50 parts by weight of silicone compound: 50 parts by weight of metal oxide | 14 minutes |
| | (quartz: 20 parts by weight, pure silicon dioxide: 30 parts by weight | |
| Example 2 | 50 parts by weight of silicone compound: 25 parts by weight of metal oxide | 12 minutes and 50 seconds |
| | (quartz: 10 wt%, pure silicon dioxide: 15 wt%) | |
| Example 3 | 50 parts by weight of silicone compound: 75 parts by weight of metal oxide | 16 minutes |
| | (quartz: 30 parts by weight, pure silicon dioxide: 45 parts by weight | |
| Example 4 | 50 parts by weight of silicone compound: 20 parts by weight of metal oxide | 11 minutes |
| | (quartz: 10 parts by weight, pure silicon dioxide: 10 parts by weight) | |
| Example 5 | 50 parts by weight of silicone compound: 80 parts by weight of metal oxide | 16 minutes and 40 seconds |
| | (quartz: 35 parts by weight, pure silicon dioxide: 45 parts by weight | |

In Examples 1 to 5 above, weight ratios between the silicone compounds and the metal oxides were 1:1, 1:0.5, 1:1.5, 1:0.4, and 1:1.6.

The insulation fail times of all of the Examples were longer than those of Comparative Examples 1 and 2 above. However, in the case of Example 4 in which the weight ratio of the metal oxide is less than 0.5, the insulation fail time was slightly short, and it is determined that the short insulation fail time was due to the generation of a slight insufficient amount of a ceramic structure having a high-density crystal structure at high temperatures due to an insufficient amount of the metal oxide.

In the case of Example 5 in which the weight ratio of the metal oxide is 1.6, the insulation fail time was sufficiently long but the amount of the metal oxide was excessive and thus the flexibility of the fire-resistant silicone decreased at room temperature, thus making it difficult to apply the fire-resistant silicone along the bus bar conductor part.

The present invention has been described above in more detail with reference to the drawings, the embodiments, etc.

### (Reference Numerals)

100: fire-resistant bus bar
110: bus bar conductor part
120: sheath layer of fire-resistant silicone
130: protective layer
140: metal sheet
141: through-hole
150: fire-resistant silicone storage tank
160, 160': upper and lower molds
200: battery module
210, 220: terminal part
300: anti-flame partition
310: bus bar installation through-hole
320: bus bar installation groove
400: pack housing
1000: battery pack

## Claims

1. A fire-resistant bus bar (100) comprising:
a bus bar conductor part (110);
a sheath layer of a fire-resistant silicone (120) covering portions of the bus bar conductor part (110) excluding both ends and ceramicized at high temperatures to support the bus bar conductor part (110); and
a protective layer (130) covering the sheath layer of the fire-resistant silicone (120),
**characterized in that** a metal sheet (140) is included in the sheath layer of the fire-resistant silicone (120) to reinforce structural rigidity of the sheath layer of the fire-resistant silicone (120).

2. The fire-resistant bus bar (100) of claim 1, wherein the fire-resistant silicone is ceramicized at a temperature of 500 to 1700 °C.

3. The fire-resistant bus bar (100) of claim 1, wherein the fire-resistant silicone is ceramicized by sintering a silicone resin containing a silicone compound represented by Chemical Formula 1 below and a metal oxide containing silicon oxide, wherein: 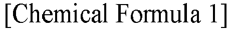 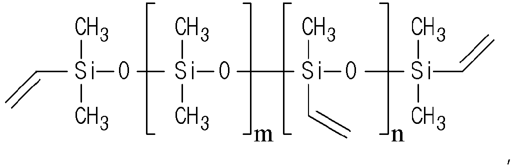 wherein m and n are each an integer of 10 to 30.

4. The fire-resistant bus bar (100) of claim 3, wherein the silicone resin and the metal oxide are contained in a weight ratio of 1:0.5 to 1:1.5.

5. The fire-resistant bus bar (100) of claim 3, wherein the metal oxide containing silicon oxide comprises at least one of pure silicon dioxide, silica, quartz, silica stone, tridymite, and keatite.

6. The fire-resistant bus bar (100) of claim 1, wherein the metal sheet (140) is included in the sheath layer of the fire-resistant silicone (120) to cover the bus bar conductor part (110) while extending along the sheath layer of the fire-resistant silicone (120) covering the bus bar conductor part (110).

7. The fire-resistant bus bar (100) of claim 6, wherein the sheath layer of the fire-resistant silicone (120) is provided between the inside of the metal sheet (140) and the bus bar conductor part (110),
the sheath layer of the fire-resistant silicone (120) is provided between the outside of the metal sheet (140) and the protective layer (130), and
portions of the sheath layer of the fire-resistant silicone (120) inside and outside the metal sheet (140) are coupled to each other through a through-hole (141) formed in the metal sheet (140).

8. The fire-resistant bus bar (100) of claim 1, wherein the metal sheet (140) is molded together with the sheath layer of the fire-resistant silicone (120).

9. The fire-resistant bus bar (100) of claim 8, wherein the metal sheet (140) is provided with a plurality of through-holes (141), and
the metal sheet (140) and the sheath layer of the fire-resistant silicone (120) are integrally formed by injection-molding a fire-resistant silicone on upper and lower surfaces of the metal sheet (140) to coat the upper and lower surfaces of the metal sheet (140) with the fire-resistant silicone and fill the plurality of through-holes (141) with the fire-resistant silicone.

10. The fire-resistant bus bar (100) of claim 9, wherein the bus bar conductor part (110) is coated with the sheath layer of the fire-resistant silicone (120) by processing the metal sheet (140) and the sheath layer of the fire-resistant silicone (120), which are integrally formed, in the form of a tape and winding the tape around the bus bar conductor part (110).

11. The fire-resistant bus bar (100) of claim 8, wherein the bus bar conductor part (110) and the metal sheet (140) are disposed in a mold, wherein the metal sheet (140) is spaced apart from the bus bar conductor part (110) while covering the bus bar conductor part (110), and
the bus bar conductor part (110) is coated with the sheath layer of the fire-resistant silicone (120) including metal sheet (140) by injection molding the fire-resistant silicone into the mold.

12. The fire-resistant bus bar (100) of claim 1, wherein
the protective layer (130) is formed of glass fiber or mica.

13. The fire-resistant bus bar (100) of claim 1, wherein the fire-resistant bus bar (100) is a high-voltage bus bar for electrically connecting high-voltage terminal parts of a plurality of battery modules (200).

14. A battery pack (1000) comprising:
a plurality of battery modules (200);
an anti-flame partition (300) installed between the plurality of battery modules (200);
the fire-resistant bus bar (100) of any one of claims 1 to 13 for electrically connecting the plurality of battery modules (200); and
a pack housing (400) accommodating the plurality of battery modules (200) and the anti-flame partition (300).

15. The battery pack (1000) of claim 14, wherein
the anti-flame partition (300) is provided with a bus bar installation through-hole (310) or a bus bar installation groove (320),
the fire-resistant bus bar (100) is seated in the bus bar installation through-hole (310) or the bus bar installation groove (320), and
both ends of the fire-resistant bus bar (100) are electrically coupled to terminal parts of battery modules (200) located at both sides of the anti-flame partition (300).

## Patentansprüche

1. Feuerbeständige Sammelschiene (100), umfassend:
einen Sammelschienenleiterteil (110);
eine Mantelschicht aus einem feuerbeständigen Silikon (120), die Abschnitte des Sammelschienenleiterteils (110) mit Ausnahme beider Enden bedeckt und bei hohen Temperaturen keramisiert ist, um den Sammelschienenleiterteil (110) zu tragen; und
eine Schutzschicht (130), die die Mantelschicht aus dem feuerbeständigen Silikon (120) bedeckt,
**dadurch gekennzeichnet, dass** ein Metallblech (140) in der Mantelschicht aus dem feuerbeständigen Silikon (120) enthalten ist, um die strukturelle Steifigkeit der Mantelschicht aus dem feuerbeständigen Silikon (120) zu verstärken.

2. Feuerbeständige Sammelschiene (100) nach Anspruch 1, wobei das feuerbeständige Silikon bei einer Temperatur von 500 bis 1700 °C keramisiert ist.

3. Feuerbeständige Sammelschiene (100) nach Anspruch 1, wobei das feuerbeständige Silikon keramisiert ist durch Sintern eines Silikonharzes, das eine Silikonverbindung enthält, die durch die chemische Formel 1 unten dargestellt ist, und eines Metalloxids, das Siliziumoxid enthält, wobei: 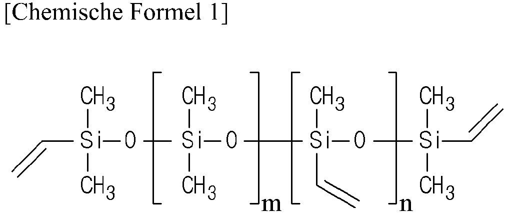 wobei m und n jeweils eine ganze Zahl von 10 bis 30 sind.

4. Feuerbeständige Sammelschiene (100) nach Anspruch 3, wobei das Silikonharz und das Metalloxid in einem Gewichtsverhältnis von 1:0,5 bis 1:1,5 enthalten sind.

5. Feuerbeständige Sammelschiene (100) nach Anspruch 3, wobei das Metalloxid, das Siliziumoxid enthält, mindestens eines von reinem Siliziumdioxid, Siliciumdioxid, Quarz, Quarzstein, Tridymit und Keatit umfasst.

6. Feuerbeständige Sammelschiene (100) nach Anspruch 1, wobei das Metallblech (140) in der Mantelschicht aus dem feuerbeständigen Silikon (120) enthalten ist, um den Sammelschienenleiterteil (110) zu bedecken, während es sich entlang der Mantelschicht aus dem feuerbeständigen Silikon (120) erstreckt, die den Sammelschienenleiterteil (110) bedeckt.

7. Feuerbeständige Sammelschiene (100) nach Anspruch 6, wobei die Mantelschicht aus dem feuerbeständigen Silikon (120) zwischen der Innenseite des Metallblechs (140) und dem Sammelschienenleiterteil (110) bereitgestellt ist,
die Mantelschicht aus dem feuerbeständigen Silikon (120) zwischen der Außenseite des Metallblechs (140) und der Schutzschicht (130) bereitgestellt ist, und
Abschnitte der Mantelschicht aus dem feuerbeständigen Silikon (120) innerhalb und außerhalb des Metallblechs (140) durch ein Durchgangsloch (141), das in dem Metallblech (140) ausgebildet ist, miteinander gekoppelt sind.

8. Feuerbeständige Sammelschiene (100) nach Anspruch 1, wobei das Metallblech (140) zusammen mit der Mantelschicht aus dem feuerbeständigen Silikon (120) geformt ist.

9. Feuerbeständige Sammelschiene (100) nach Anspruch 8, wobei das Metallblech (140) mit einer Vielzahl von Durchgangslöchern (141) bereitgestellt ist, und
das Metallblech (140) und die Mantelschicht aus dem feuerbeständigen Silikon (120) durch Spritzgießen eines feuerbeständigen Silikons auf oberen und unteren Oberflächen des Metallblechs (140) integral ausgebildet sind, um die oberen und unteren Oberflächen des Metallblechs (140) mit dem feuerbeständigen Silikon zu beschichten und die Vielzahl von Durchgangslöchern (141) mit dem feuerbeständigen Silikon zu füllen.

10. Feuerbeständige Sammelschiene (100) nach Anspruch 9, wobei der Sammelschienenleiterteil (110) mit der Mantelschicht aus dem feuerbeständigen Silikon (120) durch Verarbeiten des Metallblechs (140) und der Mantelschicht aus dem feuerbeständigen Silikon (120), die integral ausgebildet sind, in Form eines Bands und Wickeln des Bands um den Sammelschienenleiterteil (110) beschichtet ist.

11. Feuerbeständige Sammelschiene (100) nach Anspruch 8, wobei der Sammelschienenleiterteil (110) und das Metallblech (140) in einer Form angeordnet sind, wobei das Metallblech (140) von dem Sammelschienenleiterteil (110) beabstandet ist, während es den Sammelschienenleiterteil (110) bedeckt, und
der Sammelschienenleiterteil (110) mit der Mantelschicht aus dem feuerbeständigen Silikon (120), die das Metallblech (140) enthält, durch Spritzgießen des feuerbeständigen Silikons in die Form beschichtet ist.

12. Feuerbeständige Sammelschiene (100) nach Anspruch 1, wobei
die Schutzschicht (130) aus Glasfaser oder Glimmer gebildet ist.

13. Feuerbeständige Sammelschiene (100) nach Anspruch 1, wobei die feuerbeständige Sammelschiene (100) eine Hochspannungssammelschiene zum elektrischen Verbinden von Hochspannungsanschlussteilen einer Vielzahl von Batteriemodulen (200) ist.

14. Batteriepack (1000), umfassend:
eine Vielzahl von Batteriemodulen (200);
eine Entflammungstrennwand (300), die zwischen der Vielzahl von Batteriemodulen (200) installiert ist;
die feuerbeständige Sammelschiene (100) nach einem der Ansprüche 1 bis 13 zum elektrischen Verbinden der Vielzahl von Batteriemodulen (200); und
ein Packgehäuse (400), das die Vielzahl von Batteriemodulen (200) und die Entflammungstrennwand (300) aufnimmt.

15. Batteriepack (1000) nach Anspruch 14, wobei
die Entflammungstrennwand (300) mit einem Sammelschieneninstallationsdurchgangsloch (310) oder einer Sammelschieneninstallationsnut (320) bereitgestellt ist,
die feuerbeständige Sammelschiene (100) in dem Sammelschieneninstallationsdurchgangsloch (310) oder der Sammelschieneninstallationsnut (320) sitzt, und
beide Enden der feuerbeständigen Sammelschiene (100) mit Anschlussteilen von Batteriemodulen (200), die sich auf beiden Seiten der Entflammungstrennwand (300) befinden, elektrisch gekoppelt sind.

## Revendications

1. Barre omnibus ininflammable (100) comprenant :
un élément conducteur de barre omnibus (110) ;
une couche de gaine d'un silicone ininflammable (120) couvrant des parties de l'élément conducteur de barre omnibus (110), à l'exclusion des deux extrémités, et céramisée à haute température pour soutenir l'élément conducteur de barre omnibus (110) ; et
une couche de protection (130) couvrant la couche de gaine du silicone ininflammable (120),
**caractérisée en ce qu'**une tôle métallique (140) est incorporée dans la couche de gaine du silicone ininflammable (120) pour renforcer la rigidité structurelle de la couche de gaine du silicone ininflammable (120).

2. Barre omnibus ininflammable (100) selon la revendication 1, le silicone ininflammable étant céramisé à une température comprise entre 500 et 1700 °C.

3. Barre omnibus ininflammable (100) selon la revendication 1, le silicone ininflammable est céramisé par frittage d'une résine de silicone contenant un composé de silicone représenté par la formule chimique 1 ci-dessous, et un oxyde métallique contenant de l'oxyde de silicium, 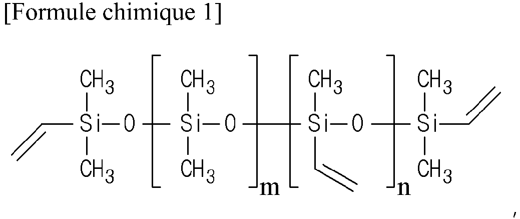 m et n étant chacun un entier compris entre 10 à 30.

4. Barre omnibus ininflammable (100) selon la revendication 3, la résine de silicone et l'oxyde métallique étant contenus avec un rapport massique compris entre 1/0,5 et 1/1,5.

5. Barre omnibus ininflammable (100) selon la revendication 3, l'oxyde métallique contenant de l'oxyde de silicium comprenant au moins un des suivants: dioxyde de silicium pur, silice, quartz, pierre de silice, tridymite et keatite.

6. Barre omnibus ininflammable (100) selon la revendication 1, la tôle métallique (140) étant incluse dans la couche de gaine du silicone ininflammable (120) pour couvrir la partie conductrice de barre omnibus (110) tout en s'étendant le long de la couche de gaine du silicone ininflammable (120) couvrant la partie conductrice de barre omnibus (110).

7. Barre omnibus ininflammable (100) selon la revendication 6, la couche de gaine du silicone ininflammable (120) étant agencée entre l'intérieur de la tôle métallique (140) et l'élément conducteur de barre omnibus (110),
la couche de gaine du silicone ininflammable (120) étant agencée entre l'extérieur de la tôle métallique (140) et la couche de protection (130), et
des parties de la couche de gaine du silicone ininflammable (120) à l'intérieur et à l'extérieur de la tôle métallique (140) étant couplées l'une à l'autre via un trou traversant (141) formé dans la tôle métallique (140).

8. Barre omnibus ininflammable (100) selon la revendication 1, la tôle métallique (140) étant moulée conjointement avec la couche de gaine du silicone ininflammable (120).

9. Barre omnibus ininflammable (100) selon la revendication 8, la tôle métallique (140) étant agencée avec une pluralité de trous traversants (141), et
la tôle métallique (140) et la couche de gaine du silicone ininflammable (120) étant formées intégralement par moulage par injection d'un silicone ininflammable sur des surfaces supérieure et inférieure de la tôle métallique (140) pour recouvrir les surfaces supérieure et inférieure de la tôle métallique (140) avec le silicone ininflammable, et remplir la pluralité des trous traversants (141) avec le silicone ininflammable.

10. Barre omnibus ininflammable (100) selon la revendication 9, l'élément conducteur de barre omnibus (110) étant revêtu de la couche de gaine du silicone ininflammable (120) par le traitement de la tôle métallique (140) et de la couche de gaine du silicone ininflammable (120), formées de façon intégrale sous forme d'un ruban, et enroulant le ruban autour de l'élément conducteur de barre omnibus (110).

11. Barre omnibus ininflammable (100) selon la revendication 8, l'élément conducteur de barre omnibus (110) et la tôle métallique (140) étant disposées dans un moule, la tôle métallique (140) étant espacée de l'élément conducteur de barre omnibus (110) tout en couvrant l'élément conducteur de barre omnibus (110), et
l'élément conducteur de barre omnibus (110) étant recouvert de la couche de gaine de silicone ininflammable (120), y compris la tôle métallique (140), en moulant par injection le silicone ininflammable dans le moule.

12. Barre omnibus ininflammable (100) selon la revendication 1,
la couche de protection (130) étant constituée de fibre de verre ou de mica.

13. Barre omnibus ininflammable (100) selon la revendication 1, la barre omnibus ininflammable (100) étant une barre omnibus haute tension pour connecter électriquement des éléments de bornes haute tension d'une pluralité de modules de batterie (200).

14. Bloc-batterie (1000) comprenant :
une pluralité de modules de batteries (200) ;
une cloison pare-flammes (300) installée entre la pluralité de modules de batterie (200) ;
la barre omnibus ininflammable (100) selon une quelconque des revendications 1 à 13 pour la connexion électrique de la pluralité de modules de batterie (200) ; et
un boîtier de bloc (400) pouvant accueillir la pluralité de modules de batterie (200) et la cloison pare-flammes (300).

15. Bloc-batterie (1000) selon la revendication 14,
la cloison pare-flammes (300) étant équipée d'un trou traversant (310) d'installation de barre omnibus (310) ou d'une rainure d'installation de barre omnibus (320),
la barre omnibus ininflammable (100) étant placée dans le trou traversant d'installation de barre omnibus (310) ou la rainure d'installation de barre omnibus (320), et
les deux bouts de la barre omnibus ininflammable (100) étant couplés électriquement aux éléments de bornes des modules de batterie (200) situés de chaque côté de la cloison pare-flammes (300).
